# FASCICULE DE BREVET EUROPEEN

(11) **EP 2 544 877 B1**
(45) Date de publication et mention de la délivrance du brevet: **08.01.2014**
(21) Numéro de dépôt: 11712988.2
(22) Date de dépôt: 10.03.2011
(51) Int. Cl.: B29C 49/68, B29C 49/64

(54) **UNITE DE TRAITEMENT D'EBAUCHES DE CORPS CREUX PAR RAYONNEMENT EQUIPEE D'UN SAS DE CONFINEMENT DU RAYONNEMENT**
EINHEIT ZUR BEARBEITUNG VON HOHLKÖRPERROHLINGEN DURCH STRAHLUNG MIT EINER STRAHLUNGSAUFNAHMESCHLEUSE
UNIT FOR TREATING BLANKS OF HOLLOW BODIES WITH RADIATION, PROVIDED WITH A RADIATION-CONTAINMENT AIRLOCK

(30) Priorité: 10.03.2010 FR 1000959
(43) Date de publication de la demande: 16.01.2013
(73) Titulaire: Sidel Participations, 76930 Octeville sur Mer (FR)
(72) Inventeur: FEUILLOLEY, Guy, F-76930 Octeville Sur Mer (FR); FRERE DIAZ, Philippe, F-76930 Octeville Sur Mer (FR)
(74) Mandataire: Louiset, Raphael
(86) Numéro de dépôt international: PCT/FR2011/050490
(87) Numéro de publication internationale: WO 2011/110791

(56) Documents cités:
- WO-A1-01/49075
- DE-A1-102007 031 771
- US-A1- 2004 047 941

## Description

L'invention a trait à la fabrication de corps creux tels que des récipients, par soufflage ou étirage-soufflage à partir d'ébauches en matière plastique.

Le terme « ébauche » désigne une préforme, obtenue par injection d'une matière plastique dans un moule, ou un corps creux intermédiaire obtenu à partir d'une préforme ayant subi au moins une première opération de formage et destiné à en subir au moins une seconde.

L'invention concerne plus précisément le traitement, par exemple thermique (chauffe) ou de décontamination, des ébauches. Le traitement des ébauches est généralement réalisé au défilé au sein d'une unité de traitement (couramment appelée « four » dans le cas de la chauffe), équipée d'une pluralité de sources de rayonnement électromagnétique devant lesquelles défilent les ébauches entraînées en rotation sur elles-mêmes (cf. par exemple le document DE 10 2007 031 771 A1).

Si la technique classique de chauffe des ébauches au moyen de lampes à incandescence de type halogènes tubulaires rayonnant suivant la loi de Planck sur un spectre continu reste à ce jour la plus répandue, une technologie alternative a récemment vu le jour, basée sur l'utilisation de sources de rayonnement électromagnétique monochromatique ou pseudo-monochromatique (notamment des lasers), émettant dans le domaine de l'infrarouge (cf. les demandes de brevet français n° FR 2 878 185 et FR 2 915 418 au nom de la demanderesse).

Le rendement et les propriétés (notamment de précision optique) de la chauffe laser, supérieurs à ceux de la chauffe halogène, permettent de réaliser une chauffe plus rapide et plus sélective des ébauches.

Toutefois, la chauffe laser nécessite la mise en oeuvre d'équipements adaptés à la dangerosité de ce type de rayonnement infrarouge, qui est invisible pour l'homme et peut engendrer des blessures graves non seulement pour les yeux, mais également pour la peau.

Il est donc nécessaire de confiner autant que possible l'enceinte au sein de laquelle défilent les ébauches, pour limiter au maximum les fuites de rayonnement. Ce confinement se trouve toutefois compliqué par la nécessité de prévoir une ventilation de l'enceinte - et donc des orifices permettant la circulation de l'air - et des ouvertures à l'entrée et à la sortie de l'enceinte pour permettre le défilement des ébauches.

Les inventeurs ont imaginé de faire parcourir aux préformes en amont et en aval de l'enceinte des trajets tortueux pour piéger le rayonnement, mais il en résulterait une inévitable complexité mécanique, combinée à une usure prématurée des supports auxquels sont accrochées les ébauches, ce qui serait inacceptable du point de vue de la production.

L'invention vise à surmonter les difficultés précédemment évoquées, en proposant une solution de confinement de l'enceinte qui, à tout le moins, n'altère pas le chemin de défilement des ébauches.

À cet effet, l'invention propose une unité de traitement d'ébauches de corps creux en matière plastique, qui comprend :
- une enceinte dans laquelle défilent longitudinalement les ébauches,
- une pluralité de sources de rayonnement électromagnétique, disposées sur au moins un côté latéral de l'enceinte,
- au moins un sas jouxtant l'enceinte, équipé de boucliers mobiles opaques au rayonnement électromagnétique définissant deux à deux une zone d'accueil d'au moins une ébauche, et circulant sur une trajectoire empiétant localement sur le trajet des ébauches.

Grâce à la structure du sas, il n'est pas nécessaire de modifier le trajet des ébauches, qui peut notamment être rectiligne. De la sorte, la vitesse de défilement n'est pas altérée par la présence du sas, tandis que celui-ci assure un bon confinement du rayonnement électromagnétique au sein de l'enceinte. Les risques de fuite du rayonnement sont ainsi minimisés, au bénéfice de la sécurité de l'unité de chauffe.

Les boucliers sont par exemple mobiles en rotation. Selon un mode de réalisation, le sas comprend au moins une paire de tourniquets montés en libre rotation de part et d'autre du trajet des ébauches, les tourniquets étant aptes à être entraînés en rotation par des supports d'ébauches circulant entre eux, et comprenant une série circulaire de panneaux radiaux disposés en étoile, qui forment lesdits boucliers.

Plus précisément, chaque tourniquet comprend par exemple une paire de platines étoilées montées en libre rotation et entre lesquelles sont montés les panneaux, qui peuvent rayonner en étoile à partir d'un manchon central assurant l'entretoisement des platines.

Selon un mode particulier de réalisation, chaque tourniquet comprend une platine inférieure empiétant localement sur le trajet des ébauches, cette platine étant munie à sa périphérie d'une série circulaire d'indentations aptes à être engrenées par des supports d'ébauches.

Les tourniquets sont de préférence décalés l'un par rapport à l'autre le long du trajet des ébauches, et tangents à leur périphérie.

Le sas peut en outre comprendre des cloisons disposées latéralement de part et d'autre du trajet des ébauches, qui définissent deux ouvertures dans le sas par lesquelles transitent les ébauches.

Des entretoises peuvent être disposées de part et d'autre d'une ouverture du sas tournée vers l'enceinte, assurant ainsi un raccord, hermétique au rayonnement, de l'enceinte et du sas.

D'autres objets et avantages de l'invention apparaîtront à la lumière de la description faite ci-après en référence aux dessins annexés dans lesquels :
- la figure 1 est une vue en perspective montrant une unité de chauffe d'ébauche munie d'un sas ;
- la figure 2 est une vue en perspective, partiellement en arraché, de l'unité de chauffe de la figure 1 ;
- la figure 3 est une vue en perspective de l'unité de chauffe de la figure 1, partiellement en arraché, coupée selon le plan horizontal III-III ;
- la figure 4 est un vue en coupe transversale de l'unité de chauffe de la figure 1, coupée selon le plan vertical IV-IV ;
- la figure 5 est une vue en perspective de l'unité de chauffe des figures précédentes, coupée selon le plan horizontal V-V de la figue 3 ;
- la figure 6 est une vue de détail, en plan, de l'unité de chauffe de la figure 1, coupée selon le plan horizontal III-III.

On a représenté sur les figures une unité **1** de traitement d'ébauches **2** de corps creux en matière plastique. En l'occurrence les ébauches **2** sont des préformes destinées à former des récipients, mais il pourrait s'agir de récipients intermédiaires ayant subi une ou plusieurs opérations de préformage (par exemple un soufflage provisoire).

Chaque préforme **2** présente un corps **3** sensiblement cylindrique, fermé à une extrémité par un fond **4** hémisphérique et se prolongeant à une extrémité opposée par un col **5.**

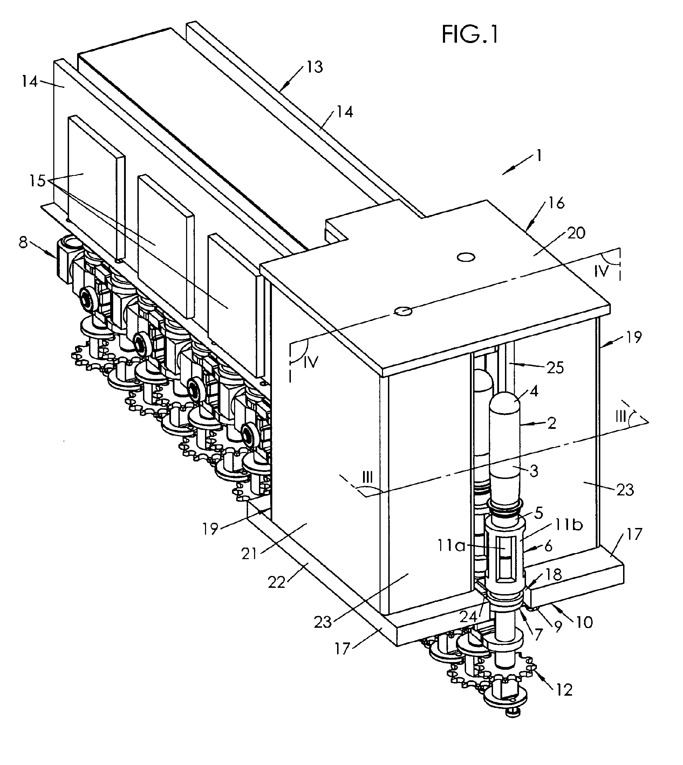

Sur les figures, les préformes **2** sont représentées col **5** en bas : c'est dans cette position qu'elles sont introduites dans l'unité **1** de traitement et qu'elles y défilent, selon un parcours longitudinal sensiblement rectiligne (bien qu'il puisse présenter tout type de profil) s'étendant entre une entrée et une sortie de l'unité **1** de traitement. Sur les figures 1, 2 et 3 on suppose que les préformes **2** défilent de la droite vers la gauche, de sorte que l'entrée est située à droite. Mais le fonctionnement pourrait être inverse, auquel cas entrée et sortie seraient inversées.

Chaque préforme **2** est montée par son col **5** sur un dispositif **6** de préhension rotatif appelé tournette et fixé sur un maillon **7** d'une chaîne **8** entraînée en déplacement à vitesse linéaire constante, dont l'assiette est maintenue au moyen de galets **9** roulant sur des pistes **10** le long du parcours (afin de laisser les parties inférieures des tournettes **6** apparentes, les pistes **10** ne sont que partiellement représentées sur les figures 1, 2 et 3).

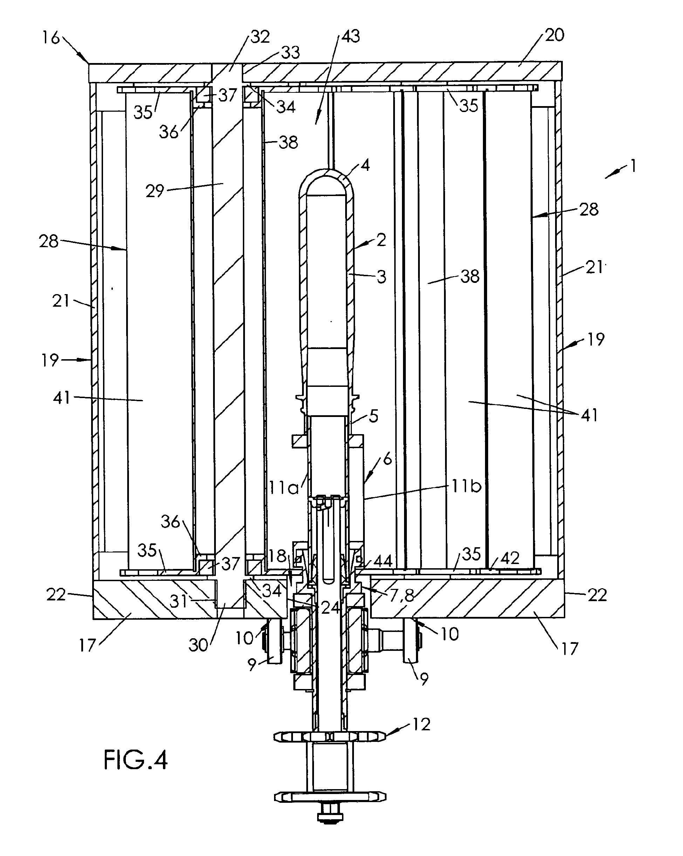

Comme cela est bien visible sur les dessins, et plus particulièrement en coupe sur la figure 4, chaque tournette **6** comprend un embout **11a** introduit dans le col **5** pour la fixation amovible de la préforme **2,** une douille **11b** mobile ajouré pour l'éjection de la préforme **2,** et un pignon **12** solidaire en rotation de l'embout **11 a,** qui engrène une crémaillère fixe (non représentée à des fins de clarté) disposée le long du parcours des préformes **2.** De la sorte, chaque préforme **2** est entraînée en rotation autour de son axe à une vitesse de rotation directement proportionnelle à sa vitesse linéaire de déplacement. C'est à titre illustratif que l'unité **1** de traitement est ici représentée configurée pour traiter les préformes **2** col **5** en bas. En variante, l'unité **1** peut être configurée pour traiter les préformes **2** col **5** en haut, sans que cette configuration n'affecte la description qui suit.

L'unité **1** de traitement comprend une enceinte **13** rayonnante (à gauche sur les figures 1, 2 et 3), délimitée par deux parois **14** latérales parallèles en regard, qui s'étendent verticalement le long du parcours, de part et d'autre de celui-ci.

L'une au moins des parois **14,** dite paroi émettrice, est tapissée d'une pluralité de sources **15** de rayonnement électromagnétique émettant de préférence de manière monochromatique ou pseudo-monochromatique, dirigées vers l'intérieur de l'enceinte **13.** Si le traitement des préformes **2** est un traitement thermique (chauffe), les sources **15** sont choisies pour émettre dans le domaine de l'infrarouge. Si le traitement est une décontamination, les sources **15** (généralement des lampes à vapeur de xénon à lumière pulsée) sont choisies pour que leur spectre couvre l'ultraviolet, domaine germicide.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Par abus de langage, on a toutefois coutume de qualifier une telle source réelle de monochromatique. Par ailleurs, on qualifie de « pseudo-monochromatique » une source émettant de manière quasi-monochromatique sur un spectre discret comprenant plusieurs bandes étroites centrées sur des fréquences principales distinctes. On parle également de source multimodes.

L'avantage d'un tel rayonnement est qu'il est concentré sur une (ou plusieurs) fréquence(s) pour laquelle (ou pour lesquelles) le comportement thermique du matériau des préformes **2** est particulièrement intéressant au regard du cahier des charges. A titre d'exemple, pour obtenir une chauffe rapide en surface des préformes **2,** on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes **2,** on peut choisir une (ou plusieurs) fréquence(s) pour laquelle (pour lesquelles) le matériau est relativement moins absorbant.

Dans ce qui suit, on suppose que le traitement est une chauffe, l'unité **1** de traitement étant de fait une unité de chauffe (également appelée « four »). Dans cette application, chaque préforme **2,** réalisée dans une matière thermoplastique telle que polyéthylène téréphtalate (PET), est destinée, après avoir été ramollie par chauffage au sein du four **1** à une température supérieure à sa température de transition vitreuse, à subir dans un moule une opération de soufflage ou d'étirage soufflage pour former un récipient tel qu'une bouteille ou un flacon.

En pratique, les sources **15** sont des diodes laser infrarouge organisées par juxtaposition et superposition pour former une ou plusieurs matrices, par exemple comme cela est décrit dans la demande internationale WO 2006/0566673 au nom de la demanderesse. En l'espèce, chaque matrice peut être une matrice de diodes laser à cavité verticale émettant par la surface (VCSEL), chaque diode émettant par exemple un faisceau laser d'une puissance unitaire de l'ordre du Watt à une longueur d'onde de d'environ 1 µm. Dans l'exemple illustré sur les figures 1, 2 et 3, le four 1 est équipé de plusieurs matrices de diodes disposées côte à côte le long de l'enceinte **13.**

Il est souhaitable de confiner le rayonnement électromagnétique émis par les sources **15.** En effet, le rayonnement émis dans l'ultraviolet ou l'infrarouge n'est pas perceptible par l'oeil humain, et une exposition prolongée (quoique non consciente) à ces rayonnements doit être évitée en raison du risque potentiel de lésion de la rétine, selon la puissance du rayonnement émis. Le rayonnement laser en particulier, cohérent et très directif, se disperse peu à l'échelle du mètre (qui est l'échelle considérée dans le cadre de la présente description).

Certes il serait techniquement réalisable, pour confiner totalement le rayonnement, de procéder à une chauffe séquentielle des préformes, consistant à admettre dans l'enceinte **13** une série de préformes **2,** à fermer hermétiquement l'enceinte **13,** à exposer ensuite les préformes **2** au rayonnement, puis à évacuer les préformes **2** en admettant la série suivante, le rayonnement étant temporairement interrompu pendant l'évacuation et l'admission des préformes **2** pour éviter toute dispersion à l'extérieur de l'enceinte **13.**

Cette solution serait satisfaisante du point de vue de la sécurité mais, d'une part, elle serait difficilement compatible avec une production à cadence élevée puisqu'elle nécessiterait l'interruption périodique de l'avancée des préformes et, d'autre part, elle serait susceptible, en raison des à-coups sur la chaîne **8,** de provoquer une usure prématurée de celle-ci.

Aussi est-il préférable de conserver un défilement continu des préformes **2** dans l'unité 1 de traitement. Deux contraintes doivent alors être prises en compte. D'abord, le rayonnement électromagnétique est permanent, c'est-à-dire qu'il n'est pas interrompu pendant la production. Ensuite, l'enceinte **13** ne peut être close hermétiquement puisqu'elle doit permettre l'admission et l'évacuation continue des préformes **2.**

C'est pourquoi l'unité **1** de traitement comprend, en entrée et/ou en sortie, un sas **16** qui jouxte l'enceinte **13** à l'une au moins de ses extrémités longitudinales, et dont la fonction est de piéger le rayonnement issu de l'enceinte **13** tout en permettant l'admission et/ou l'évacuation en continu des préformes **2** dans/de l'enceinte **13.**

Dans l'exemple illustré sur les dessins, on a représenté par mesure de simplicité un sas **16** unique. Dans l'hypothèse où, comme cela est évoqué ci-dessus, les préformes **2** circulent de droite à gauche, on voit que le sas **16** est ici disposé à l'entrée de l'unité **1** de traitement. Dans l'hypothèse inverse, où les préformes **2** circulent de gauche à droite, on comprend que l'exemple illustré montre un sas **16** disposé à la sortie de l'unité **1** de traitement. On peut également munir l'unité **1** de traitement de deux sas **16,** disposés l'un à l'entrée et l'autre à la sortie.

Le sas **16** comprend :
- un socle constitué de deux embases **17** écartées l'une de l'autre pour former un interstice **18** propre à permettre le passage de la chaîne **8** (et donc le défilement des préformes **2),** et dont une face inférieure forme une piste **10** sur laquelle roulent les galets **9,**
- deux cloisons **19** à section en U fixée chacune sur une embase **17** de part et d'autre de l'interstice **18,** et
- un capot **20** monobloc qui coiffe les cloisons **19** en fermant vers le haut le passage de la chaîne **8** et des préformes **2.**

Chaque cloison **19** comprend une section **21** latérale, qui s'étend longitudinalement parallèlement au parcours des préformes **2** le long d'un bord **22** externe de l'embase **17,** et deux retours **23** en équerre qui s'étendent transversalement depuis la section **21** latérale jusqu'à un bord **24** interne de l'embase **17,** délimitant l'interstice **18.**

Les retours **23** en équerre disposés en vis-à-vis délimitent conjointement des ouvertures du sas **16** par lesquelles transitent les préformes **2,** à savoir une ouverture **25** externe tournée vers l'extérieur de l'unité **1** de traitement, et une ouverture **26** interne tournée vers l'enceinte **13.**

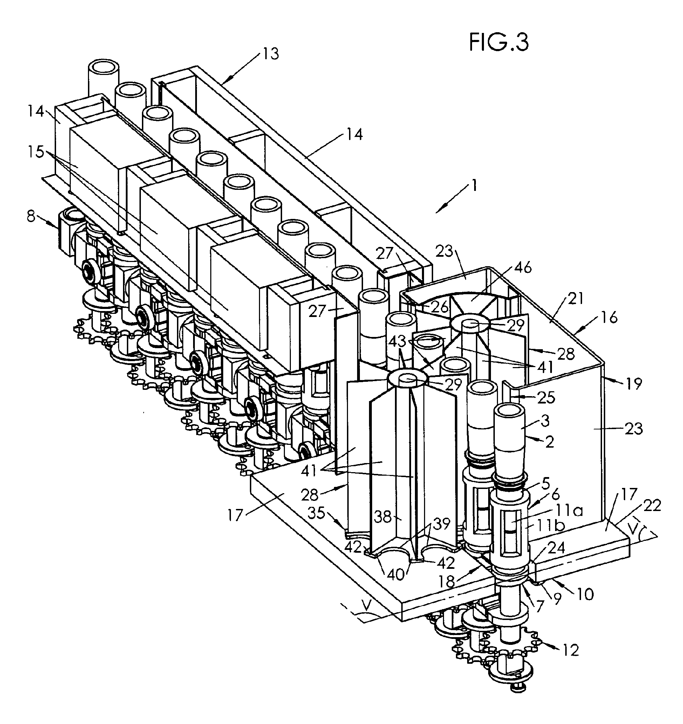

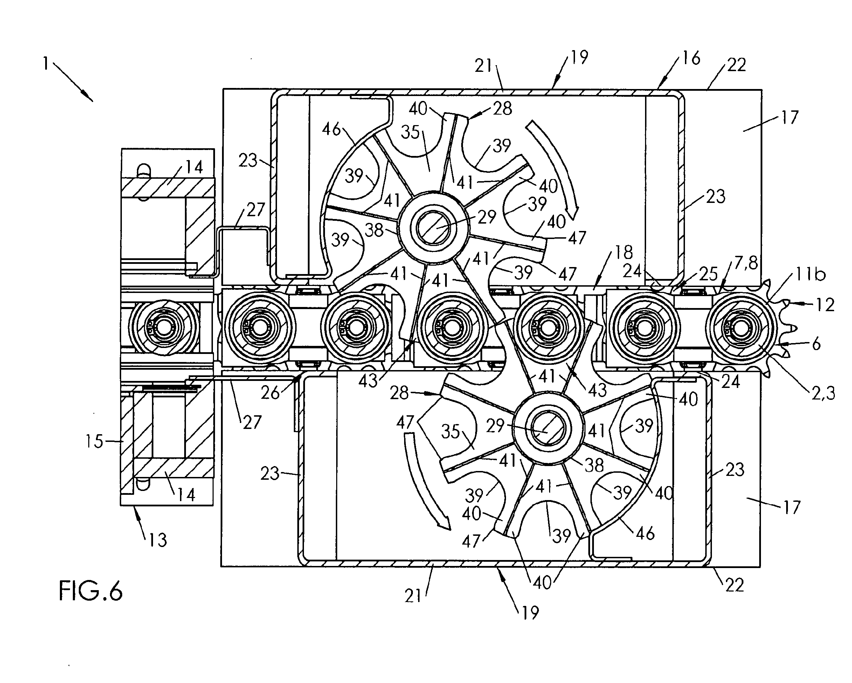

Comme cela est bien visible sur les figures 3 et 6, le sas **16** n'est pas nécessairement en communication directe avec l'enceinte **13,** l'ouverture **26** interne pouvant être légèrement écartée de celle-ci. Un tel écartement peut être prévu à dessein, de manière à diminuer l'angle solide du rayonnement issu de l'enceinte **13** et pénétrant dans le sas **16.** Dans ce cas, on a avantage à colmater l'intervalle entre le sas **16** et l'enceinte **13,** de part et d'autre de l'ouverture **26** interne, au moyen d'entretoises **27** (ici sous la forme de profilés métalliques) assurant le raccord hermétique au rayonnement, de l'enceinte **13** et du sas **16.**

Il va de soi que les embases **17,** les cloisons **19** et le capot **20** sont réalisés dans des matériaux supportant des températures élevées et opaques au rayonnement électromagnétique issu de l'enceinte **13.** Il peut s'agir d'une tôle d'acier, de préférence munie sur sa face interne (tournée vers l'intérieur du sas) d'un revêtement absorbant le rayonnement (par exemple une peinture noire mate).

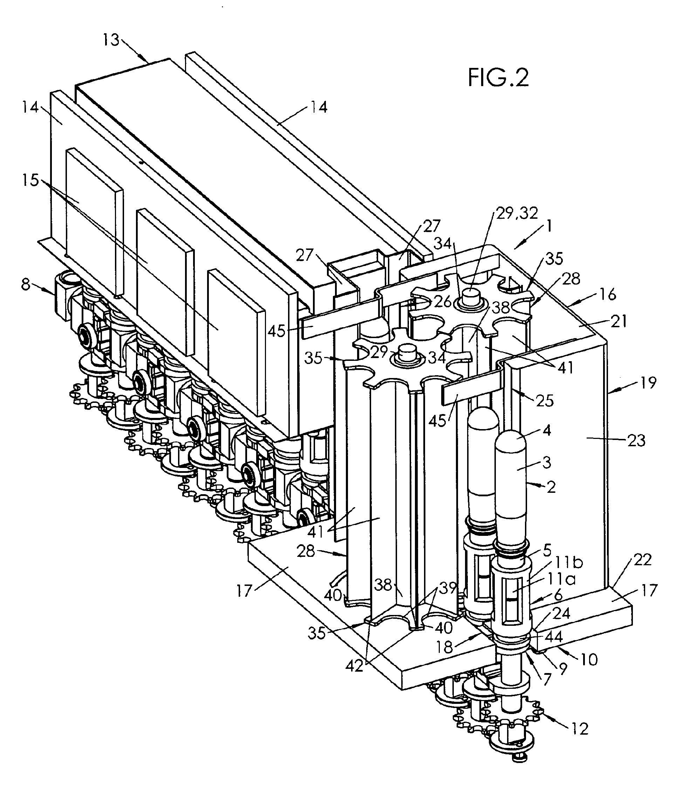

Comme cela est illustré sur les dessins, et plus visiblement à partir de la figure 2, le sas **16** est muni d'une paire de tourniquets **28** montés verticalement entre une embase **17** respective et le capot **20.**

Chaque tourniquet **28** comprend un axe **29** fixe dont une extrémité **30** inférieure filetée est vissée dans un trou **31** taraudé pratiqué dans l'embase **17** correspondante, et une extrémité **32** supérieure logée dans un alésage **33** supérieur pratiqué dans le capot **20,** à la verticale du trou **31.**

A chacune de ses extrémités **30,31,** l'axe **29** est muni de collerettes **34** qui forment des butées d'arrêt plaquées respectivement contre l'embase **17** et le capot **20.**

Le tourniquet **28** comprend par ailleurs deux platines **35** étoilées, à savoir une platine inférieure, montée sur l'axe **29** à proximité de l'extrémité **30** inférieure, et une platine supérieure, montée sur l'axe **29** à proximité de l'extrémité **32** supérieure.

Chaque platine **35** comprend un moyeu **36** par lequel elle est montée libre en rotation sur l'axe **29,** par exemple au moyen d'un roulement **37** ou un palier intercalé axialement entre la collerette **34** et le moyeu **36.**

Les platines **35** sont entretoisées au moyen d'un manchon **38** cylindrique entourant l'axe **29** et dont les extrémités sont emmanchées sur les moyeux **36.**

Chaque platine **35** présente un contour circulaire et comprend à sa périphérie une série circulaire régulière d'indentations **39** à profil circulaire, en l'occurrence au nombre de huit (mais ce nombre peut être inférieur, ou supérieur), définissant entre elles une série circulaire de branches **40** d'extension radiale, de sorte que la platine **35** présente, vue en plan, le profil d'une roue dentée.

Chaque tourniquet **28** est en outre muni d'une série circulaire de panneaux **41** (en nombre égal aux branches, donc huit ici) qui s'étendent verticalement entre les platines **35,** par rapport auxquelles ils sont immobilisés, et radialement dans l'axe des branches **40** depuis le manchon **38** jusqu'à la périphérie de la platine **35.**

Les panneaux **41** sont immobilisés en rotation par rapport aux platines **35** en étant insérés, à leurs extrémités, dans des rainures **42** pratiquées radialement dans les platines **35** dans l'axe des branches **40.** L'immobilisation radiale des panneaux **41** peut être réalisée par collage de leurs extrémités dans les rainures **42.** Toutefois, selon un mode préféré de réalisation illustré sur les dessins, les panneaux **41** forment avec le manchon **38** un ensemble monobloc.

L'axe **29** peut être réalisé en acier. Les platines **35** peuvent être réalisées en acier, en aluminium (ou alliage) ou de préférence dans une matière plastique résistant à l'usure et à faible coefficient de friction, tel que PA (polyamide), POM (polyacétal), PTFE (Polytétrafluoroéthylène), ou équivalent.

Les panneaux **41** (comme le manchon **38)** sont réalisés dans une matière opaque au rayonnement électromagnétique issu de l'enceinte **13.** Afin de conférer une certaine légèreté au tourniquet **28,** les panneaux **41** sont de préférence réalisés dans une matière plastique choisie pour sa température de service élevée et ses propriétés barrière (opacité) au rayonnement électromagnétique. A titre d'exemple, on pourra opter pour l'un des polymères suivants : PEEK (à base de polyétheréthercétone), PPS (polyphénylènesulfide), PI (polyimide), ou équivalent. Les panneaux **41** sont de préférence également prévus pour absorber le rayonnement électromagnétique issu de l'enceinte **13.** A cet effet, la matière pourra être soit teinte dans la masse (de préférence en noir), soit être revêtue d'une peinture absorbante (par exemple noire mate). De la sorte, chaque panneau **41** forme un bouclier au rayonnement électromagnétique issu de l'enceinte.

Comme cela est bien visible sur la figure 6, les tourniquets **28** s'étendent en partie au droit de l'interstice **18,** empiétant ainsi localement sur le trajet des préformes **2.** Par ailleurs, afin de ne pas interférer, les tourniquets **28** sont décalés longitudinalement l'un par rapport à l'autre, parallèlement au trajet des préformes **2,** tout en étant positionnés au plus près l'un de l'autre, en étant sensiblement tangents à leurs périphéries, de manière à bloquer autant que possible le rayonnement.

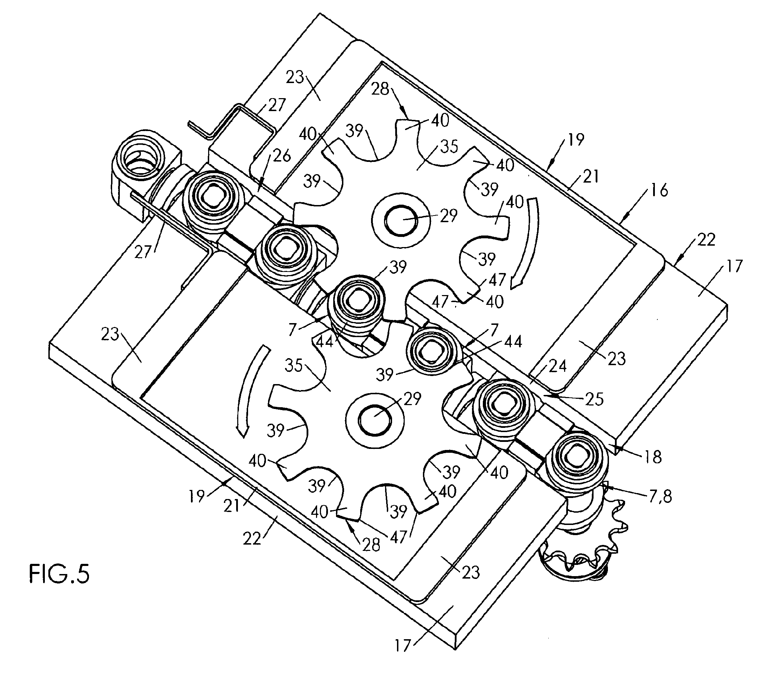

On voit sur la figure 6 que deux les panneaux **41** adjacents définissent deux à deux une zone **43** d'accueil d'une préforme **2** individuelle montée sur une tournette **6** dont le maillon **7** engrène la platine **35** inférieure. Plus précisément, comme cela est illustré sur les figures 4 et 5, le sas **16** (et ses composants) et la chaîne **8** sont dimensionnés de manière que les platines **35** inférieures se trouvent verticalement au niveau d'une partie **44** engrenante cylindrique du maillon **7** dont le rayon correspond, au jeu près, au rayon de l'indentation **39.**

De la sorte, le défilement de la chaîne **8** entraîne, par engrènement des platines **35** inférieures, les tourniquets **28** en rotation autour de leurs axes **29** dans des sens opposés. Ainsi, dans la configuration illustrée sur la figure 5, où l'on suppose que la chaîne **8** circule de droite à gauche, le tourniquet **28** situé en amont (dans la partie basse du dessin) est entraîné en rotation dans le sens antihoraire, tandis que le tourniquet **28** situé en aval (dans la partie haute du dessin) est entraîné en rotation dans le sens horaire, comme cela est indiqué par les flèches.

Il est à la portée de l'homme du métier de dimensionner précisément les tourniquets **28,** et en particulier les platines **35,** pour les adapter à la chaîne **8,** et plus précisément au pas de celle-ci et au diamètre des parties **44** engrenantes des maillons **7.**

Les tourniquets **28** sont ainsi positionnés qu'aucun rayon issu de l'enceinte **13** et pénétrant par l'ouverture **26** interne du sas **16** ne peut atteindre directement l'ouverture **27** externe. En effet, grâce à la disposition décalée des tourniquets **28,** les panneaux **41** circulent localement sur le trajet des préformes **2** en empiétant sur celui-ci, et forment de ce fait, quelle que soit la position angulaire des tourniquets **28,** des chicanes mobiles interposées sur la trajectoire du rayonnement.

Quel que soit son angle d'incidence dans un plan horizontal, tout rayon pénétrant dans le sas **16** rencontre au moins une surface (principalement d'un panneau **41,** ou d'un manchon **38)** qui assure soit une absorption complète du rayon si son énergie est assez faible, soit, plus probablement, une absorption et une réflexion partielles si l'énergie du rayon est relativement élevée.

Par ailleurs, comme cela est le cas dans l'exemple illustré sur la figure 6, le nombre de panneaux **41** (huit par tourniquet) est suffisamment élevé pour que tout rayon dirigé vers l'ouverture **25** externe et frappant un panneau **41** soit dévié dans une direction éloignée de cette ouverture **25** externe (et même de préférence en direction de l'ouverture **26** interne), de sorte que le rayon subit nécessairement des réflexions multiples qui épuisent rapidement son énergie. De la sorte, le rayonnement résiduel s'échappant éventuellement du sas **16** par l'ouverture externe est énergétiquement si faible qu'il ne représente aucun danger pour l'homme, même soumis à une exposition prolongée.

Cette structure permet de conserver le trajet (en l'occurrence linéaire) des préformes, et n'altère pas la cadence de production, qui peut être maintenue à des niveaux élevés. En effet, le sas **16** est passif puisque les tourniquets **28** sont montés fous, étant engrenés par la chaîne **8** à la vitesse linéaire de laquelle ils adaptent automatiquement leur vitesse de rotation.

Diverses dispositions peuvent être prévues pour compléter les caractéristiques qui viennent d'être exposées.

Ainsi, on peut compléter le colmatage du sas **16 :**
- au moyen de bandeaux **45** disposés transversalement à cheval entre les cloisons **19** au niveau des ouvertures **25,26,** de manière à boucher celles-ci au-dessus des préformes **2** (figure 2) ;
- au moyen de plaques **46** cintrées disposées verticalement à la périphérie des tourniquets **28** et entourant partiellement ceux-ci, de manière à absorber en totalité ou en partie le rayonnement qui aurait contourné le tourniquet **28** (figure 3).

Par ailleurs, afin de faciliter l'engrenage des tourniquets **28** par la chaîne **8,** les branches **40** peuvent être munies de chanfreins **47** (ou de congés) sur les bords des indentations **39.**

De même, bien qu'on ait décrit et représenté deux tourniquets **28,** on pourrait les prévoir en nombre supérieur, par exemple disposés en quinconce dans le sas **16** le long du trajet des préformes **2.**

La réalisation de chicanes sur le trajet du rayonnement électromagnétique dans le sas n'est nullement limitée à la réalisation des tourniquets **28** décrits ci-dessus. Ainsi, des boucliers opaques au rayonnement pourraient être montés mobiles en translation le long du trajet des préformes, par exemple sur des courroies tendues entre des poulies de renvoi et circulant parallèlement au trajet.

## Revendications

1. Unité **(1)** de traitement d'ébauches **(2)** de corps creux en matière plastique, qui comprend :
- une enceinte **(13)** dans laquelle défilent longitudinalement les ébauches **(2),**
- une pluralité de sources **(15)** de rayonnement électromagnétique, disposées sur au moins un côté latéral de l'enceinte **(13),**
**caractérisée :**
- **en ce qu'**elle comprend au moins un sas **(16),** jouxtant l'enceinte **(13),** équipé de boucliers **(41)** mobiles opaques au rayonnement électromagnétique,
- **en ce que** deux boucliers **(41)** définissent deux à deux une zone **(43)** d'accueil d'au moins une ébauche **(2),**
- et **en ce que** lesdits boucliers **(41)** circulent sur une trajectoire empiétant localement sur le trajet des ébauches **(2).**

2. Unité **(1)** de traitement selon la revendication **1, caractérisée en ce que** les boucliers sont mobiles en rotation.

3. Unité **(1)** de traitement selon la revendication **1** ou la revendication **2, caractérisée en ce que** le sas **(16)** comprend au moins une paire de tourniquets **(28)** montés en libre rotation de part et d'autre du trajet des ébauches **(2),** les tourniquets **(28)** étant aptes à être entraînés en rotation par des supports **(7)** d'ébauches **(2)** circulant entre eux, et comprenant une série circulaire de panneaux **(41)** radiaux disposés en étoile, qui forment lesdits boucliers.

4. Unité **(1)** de traitement selon la revendication **3, caractérisée en ce que** chaque tourniquet **(28)** comprend une paire de platines **(35)** étoilées montées en libre rotation et entre lesquelles sont montés les panneaux **(41).**

5. Unité **(1)** de traitement selon la revendication **4, caractérisée en ce que** les panneaux **(41)** rayonnent en étoile à partir d'un manchon **(38)** central assurant l'entretoisement des platines **(35).**

6. Unité **(1)** de traitement selon la revendication **4** ou **5, caractérisée en ce que** chaque tourniquet **(28)** comprend une platine **(35)** inférieure empiétant localement sur le trajet des ébauches (2), cette platine **(35)** étant munie à sa périphérie d'une série circulaire d'indentations **(39)** aptes à être engrenées par des supports **(7)** d'ébauches **(2).**

7. Unité **(1)** de traitement selon l'une des revendications **3** à **6, caractérisée en ce que** les tourniquets **(28)** sont décalés l'un par rapport à l'autre le long du trajet des ébauches **(2).**

8. Unité **(1)** de traitement selon l'une des revendications **3** à **7, caractérisée en ce que** les tourniquets **(28)** sont tangents à leur périphérie.

9. Unité **(1)** de traitement selon l'une des revendications précédentes, **caractérisée en ce que** le sas **(16)** comprend des cloisons **(19)** disposées latéralement de part et d'autre du trajet des ébauches **(2),** qui définissent deux ouvertures **(25,26)** dans le sas **(16)** par lesquelles transitent les ébauches **(2).**

10. Unité **(1)** de traitement selon la revendication **9, caractérisée en ce qu'**elle comprend des entretoises **(27)** disposées de part et d'autre d'une ouverture **(26)** du sas **(16)** tournée vers l'enceinte **(13),** assurant un raccord, hermétique au rayonnement, de l'enceinte **(13)** et du sas **(16).**

## Patentansprüche

1. Einheit (1) zur Verarbeitung von Rohlingen (2) von Hohlkörpern aus Kunststoff, die enthält:
- einen Raum (13), in dem die Rohlinge (2) in Längsrichtung vorbeilaufen,
- eine Vielzahl von Quellen (15) elektromagnetischer Strahlung, die auf mindestens einer Seite des Raums (13) angeordnet sind,
**dadurch gekennzeichnet:**
- **dass** sie mindestens eine an den Raum (13) angrenzende Schleuse (16) enthält, die mit gegenüber der elektromagnetischen Strahlung undurchlässigen beweglichen Abschirmungen (41) ausgestattet ist,
- **dass** zwei Abschirmungen (41) paarweise eine Aufnahmezone (43) mindestens eines Rohlings (2) definieren,
- und **dass** die Abschirmungen (41) auf einer Bahn umlaufen, die lokal auf die Strecke der Rohlinge (2) übergreift.

2. Verarbeitungseinheit (1) nach Anspruch 1, **dadurch gekennzeichnet, dass** die Abschirmungen drehbeweglich sind.

3. Verarbeitungseinheit (1) nach Anspruch 1 oder Anspruch 2, **dadurch gekennzeichnet, dass** die Schleuse (16) mindestens ein Paar von Drehkreuzen (28) enthält, die frei drehend zu beiden Seiten der Strecke der Rohlinge (2) montiert sind, wobei die Drehkreuze (28) von Trägern (7) von Rohlingen (2) in Drehung versetzt werden können, die zwischen ihnen umlaufen, und eine kreisförmige Reihe von sternförmig angeordneten, radialen Platten (41) enthält, die die Abschirmungen formen.

4. Verarbeitungseinheit (1) nach Anspruch 3, **dadurch gekennzeichnet, dass** jedes Drehkreuz (28) ein Paar von sternförmigen Platinen (35) enthält, die frei drehend montiert sind und zwischen denen die Platten (41) montiert sind.

5. Verarbeitungseinheit (1) nach Anspruch 4, **dadurch gekennzeichnet, dass** die Platten (41) ausgehend von einer zentralen Muffe (38) sternförmig ausstrahlen, die die Abstandshaltung der Platinen (35) gewährleistet.

6. Verarbeitungseinheit (1) nach Anspruch 4 oder 5, **dadurch gekennzeichnet, dass** jedes Drehkreuz (28) eine untere Platine (35) enthält, die lokal auf die Strecke der Rohlinge (2) übergreift, wobei diese Platine (35) an ihrem Umfang mit einer kreisförmigen Reihe von Zahnungen (39) versehen ist, in die Träger (7) von Rohlingen (2) eingreifen können.

7. Verarbeitungseinheit (1) nach einem der Ansprüche 3 bis 6, **dadurch gekennzeichnet, dass** die Drehkreuze (28) zueinander entlang der Strecke der Rohlinge (2) versetzt sind.

8. Verarbeitungseinheit (1) nach einem der Ansprüche 3 bis 7, **dadurch gekennzeichnet, dass** die Drehkreuze (28) an ihrem Umfang tangierend sind.

9. Verarbeitungseinheit (1) nach einem der vorhergehenden Ansprüche, **dadurch gekennzeichnet, dass** die Schleuse (16) seitlich zu beiden Seiten der Strecke der Rohlinge (2) angeordnete Trennwände (19) enthält, die zwei Öffnungen (25, 26) in der Schleuse (16) definieren, die die Rohlinge (2) durchqueren.

10. Verarbeitungseinheit (1) nach Anspruch 9, **dadurch gekennzeichnet, dass** sie zu beiden Seiten einer zum Raum (13) gerichteten Öffnung (26) der Schleuse (16) angeordnete Abstandshalter (27) enthält, die eine gegenüber der Strahlung hermetische Verbindung des Raums (13) und der Schleuse (16) gewährleisten.

## Claims

1. Unit (1) for processing hollow body blanks (2) made of plastic, which comprises:
- an enclosure (13) in which the blanks (2) pass longitudinally,
- a plurality of electromagnetic radiation sources (15) arranged on at least one lateral side of the enclosure (13),
**characterized:**
- **in that** it comprises at least one chamber (16), adjoining the enclosure (13), equipped with moveable shields (41) which are opaque to electromagnetic radiation,
- **in that** two shields (41) define in pairs a zone (43) for receiving at least one blank (2),
- and **in that** the said shields (41) circulate on a trajectory impinging locally on the path of the blanks (2).

2. Processing unit (1) according to Claim 1, **characterized in that** the shields are rotatable.

3. Processing unit (1) according to Claim 1 or Claim 2, **characterized in that** the chamber (16) comprises at least one pair of turnstiles (28) mounted in free rotation on either side of the path of the blanks (2), the turnstiles (28) being able to be rotated by supports (7) of blanks (2) circulating between them, and comprising a circular series of radial panels (41) arranged in a star shape, which form the said shields.

4. Processing unit (1) according to Claim 3, **characterized in that** each turnstile (28) comprises a pair of star-shaped plates (35) mounted in free rotation and between which the panels (41) are mounted.

5. Processing unit (1) according to Claim 4, **characterized in that** the panels (41) radiate in a star shape from a central sleeve (38) which braces the plates (35).

6. Processing unit (1) according to Claim 4 or 5, **characterized in that** each turnstile (28) comprises a lower plate (35) which impinges locally on the path of the blanks (2), this plate (35) being provided at its periphery with a circular series of indentations (39) capable of being engaged by supports (7) of blanks (2).

7. Processing unit (1) according to one of Claims 3 to 6, **characterized in that** the turnstiles (28) are offset with respect to one another along the path of the blanks (2).

8. Processing unit (1) according to one of Claims 3 to 7, **characterized in that** the turnstiles (28) are tangent at their periphery.

9. Processing unit (1) according to one of the preceding claims, **characterized in that** the chamber (16) comprises partitions (19) arranged laterally on either side of the path of the blanks (2), which define two openings (25, 26) in the chamber (16) through which the blanks (2) pass.

10. Processing unit (1) according to Claim 9, **characterized in that** it comprises spacers (27) arranged on either side of an opening (26) of the chamber (16) directed towards the enclosure (13), providing a connection, hermetic to the radiation, of the enclosure (13) and the chamber (16).
